(19) **Europäisches Patentamt / European Patent Office / Office européen des brevets**

(11) **EP 1 834 926 A1**

(12) # EUROPEAN PATENT APPLICATION

(43) Date of publication:
**19.09.2007 Bulletin 2007/38**

(51) Int Cl.:
*C01B 33/38* (2006.01)     *C08K 3/34* (2006.01)
*G12B 17/02* (2006.01)     *H05K 9/00* (2006.01)
*G21F 1/06* (2006.01)      *D01F 1/10* (2006.01)

(21) Application number: **06075547.7**

(22) Date of filing: **07.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Geesink, Johannes Hendrik**
**6365 AR Schinnen (NL)**

(72) Inventors:
• **Geesink, Johannes Hendrik**
**6365 AR Schinnen (NL)**

• **Linsen, Jozef Maria Herman**
**6412 DK Heerlen (NL)**
• **Driessen, Wilhelmus Johannes Marie Driessen**
**6171 XR Stein (NL)**
• **Bremer, Leonardus Gerardus Bernardus**
**4600 Visé (BE)**

(74) Representative: **van Loon, C.J.J. et al**
**c/o VEREENIGDE**
**Johan de Wittlaan 7**
**2517 JR Den Haag (NL)**

(54) **Mineral composition**

(57) The invention relates to a mineral clay composition for improving the well-being of living beings adversely affected by equipment emitting non-ionizing electromagnetic radiation, comprising a layered phyllosilicate comprising paramagnetic ions, and having a conductivity, measured in non-conductive water at a concentration of 1 wt.% of the mineral clay composition relative to the total weight of the non-conductive water and the mineral clay composition, of at most 20 μS/cm.

EP 1 834 926 A1

**Description**

The invention relates to a material composition, more particular to a material composition that is suitable for improving the well-being of living beings in the presence of non-ionising electromagnetic radiation. The invention also relates to a process for making the material composition, to starting materials that can be used in this process, and to the use of the material composition in various applications and products.

Since the industrial revolution in the 19$^{th}$ century, the exposure to electromagnetic waves in the frequency spectrum of 1 Hz till 10 GHz in the surrounding of our living space has been increased between thousand till one million times. As societies industrialize and the technological revolution continues, there is an ongoing increase in the number and diversity of electromagnetic field (EMF) sources. These sources include power cables, video display units (VDUs) associated with computers, WIFINVLAN applications, mobile phones and their base stations. While these devices have made our life richer, safer and easier, they have been accompanied by concerns about possible health risks due to their EMF emissions. For some time a number of persons have reported a variety of health problems that they relate to exposure to EMF. While some of these persons report mild symptoms and react by avoiding the electromagnetic fields as best they can, others are so severely affected that they cease work and change their entire lifestyle. This reputed sensitivity to EMF has been generally termed "electromagnetic hypersensitivity" or EHS. Information on this topic is provided in a WHO Workshop on Electrical Hypersensitivity (Prague, Czech Republic, 2004), an international conference on EMF and non-specific health symptoms (COST244bis, 1998), a European Commission report (Bergqvist and Vogel, 1997) and recent reviews in the literature. At this moment EHS is characterized by a variety of non-specific symptoms, which afflicted individuals attribute to exposure to EMF. The symptoms most commonly experienced include dermatological symptoms (redness, tingling, and burning sensations) as well as neurasthenic and vegetative symptoms (fatigue, tiredness, concentration difficulties, dizziness, nausea, heart palpitation, and digestive disturbances). Electrosensitivity for non ionising electromagnetic radiation have been planned to be further investigated by perception studies and epidemiological studies as discussed at the EMF Health risk Workshop, Monte Verita, 20-24 November 2005, and repeated as replica studies in Switzerland, England, Denmark, Japan, Finland.

In the mean time several hundreds of studies have been performed to determine the biological effects of man-made electromagnetic fields and at this very moment the society is becoming aware of potential negative influences of these fields on the health of living beings. In the same time, people have also searched for measures to reduce the "electromagnetic hypersensitivity" or EHS and suppressing the harmful effects of non-ionising electromagnetic radiation. The solutions that are proposed include various devices and material compositions.

Such a material composition is known from EP-0551668-A1. This known material composition consists of a mixture of compounds based on rare earth elements, non-ferro metals (*"métaux"*), metalloids (*"metalloids"*) and/or oxides. Metal oxides are found in many minerals and are widely available. However, their effectiveness for reducing the "electromagnetic hypersensitivity" or EHS and suppressing the harmful effects of non-ionising electromagnetic radiation is very low. The compounds based on rare earth elements are preferably on basis of cerium, lanthanium and scandium, more particular cerium chloride ($CeCl_x$), lanthanium oxide ($LaO_x$) and scandium chloride ($ScCl_x$), which in an example in EP-0551668-A1 are dissolved in amounts of 69.22 g $CeCl_x$, 21.98 g $LaO_x$ and 16.842 g $ScCl_x$ in 1500 ml water. This known material composition is diluted in water and placed inside a non-metallic container of small diameter, thus forming a so-called atomic resonator. The resonator is placed in the top left corner of a frame of a cathode-ray screen and a similar resonator, but of different composition, in the bottom right corner of this frame, these resonators becoming resonant under the effect of the electromagnetic radiation produced by the screen. The described known material composition is claimed in EP-0551668-A1 to be useful for suppressing the harmful effects for users of electromagnetic radiation. A disadvantage of this known material composition is that the diluted water solutions have a limited thermal stability, loosing their effectiveness with respect to restoring the well-being of living beings in the neighbourhood of sources of non-ionising electromagnetic radiation when heated to a temperature of about 60°C and above. Another disadvantage is that the known material composition from EP-0551668-A1 has a limited effect on the well-being of living beings in the neighbourhood of sources of non-ionising electromagnetic radiation, requiring relative high concentrations of expensive compounds of rare earth elements and a set-up of two resonators comprising different compositions.

The aim of the invention is to provide a material composition that shows an improved performance with respect to the well-being of living beings in the neighbourhood of sources of non-ionising electromagnetic radiation, compared to the known metal oxides, and which does not have the disadvantages of the other known compositions described above, or at least to a lesser extent.

This aim has been achieved with the material composition according to the invention, wherein the material composition is a mineral clay composition (a) comprising a layered phyllosilicate comprising paramagnetic ions, and (b) having a conductivity, measured in non-conductive water at a concentration of 1 wt.% of the mineral clay composition relative to the total weight of the non-conductive water and the mineral clay composition, of at most 20 $\mu$S/cm.

The effect of the composition according to the invention, being a mineral clay composition comprising a layered phyllosilicate comprising paramagnetic ions, and having said low conductivity, is an improved performance with respect to the well-being of living beings, compared to the material composition known from EP-0551668-A1. It is noted that with "non-conductive water" used for the conductivity measurements, is understood water that itself has a conductivity of 0.15 ± 0.05 μS/cm. With the term "well-being" within the context of this invention is understood a natural physical condition of vitality, alertness, relaxation and absence of fatigue, headaches, drowsiness and loss of concentration. The negative influence of man-made technologies emitting non-ionising electromagnetic waves can be reduced and the well-being can be at least partly and eventually fully restored by installing the composition according to the invention in a magnetic field near or around said technologies. This effect has been observed in individual tests with persons sensitive to non-ionising radiation emitted by electric/electronic equipment, whereas the overall effect has been confirmed in a larger statistical test with a larger group of persons sensitive to non-ionising radiation emitted by electric/electronic equipment. Another advantage is that the material composition according to the invention can be made of cheap compositions from natural sources comprising rare earth elements without the need to isolate the rare earth elements and converting them into their respective chlorides or oxides. A further advantage of the material composition according to the invention is that the improved performance with respect to the well-being is already obtained with very low amounts and at very low concentrations of the mineral composition in a carrier material. A surprising effect is also that this performance is obtained when the conductivity of the mineral clay composition according to the invention is as low as mentioned above, whereas the performance is much less when the conductivity is much higher.

Another patent application dealing with neutralization of harmful electromagnetic waves to enhance health and life environments in association with far infrared rays is WO0034411. WO0034411 describes a composition of a multipurpose far-infrared radiation material including 0.2-38 parts by weight of at least one non-metal compound selected from the group consisting of $SiO_2$ and $P_2O_5$; 0.01-70 parts by weight of at least one metal compound selected from the group consisting of $TiO_2$, $Al_2O_3$, $Fe_2O_3$, FeO, MnO, MgO, CaO, $Na_2O$, $K_2O$, $Cr_2O_3$, NiO, BaO and SrO; 0.01-2 parts by weight of at least one rare earth element selected from the group consisting of Nd, Y, Ce, Sm, La and Yb; and 0.02-18 parts by weight of at least one element selected from the group consisting of C, Cr, Ni, Ba, Sr, Co, Cu, Li, Nb, Zr, Zn and Ge. The latter elements are used in their elementary form, i.e. as metals. The material is claimed to have multiple functions including neutralization of harmful electromagnetic waves. WO0034411 does not describe a mineral clay composition, let alone a mineral clay composition according to the invention, nor any suggestion for the effect thereof as according to the invention.

A further patent application dealing with protection against electromagnetic waves is WO02090626. This patent application describes mineral fibers and the preparation thereof. The mineral fibers in WO02090626 are prepared by baking a mineral with a multi-sided crystal structure and a low-hardness mineral with a tabular or a scale crystal structure, milling the minerals to a small particle diameter, admixing the milled minerals with an inorganic antibiotic, compounding the resulting mixture with a resin to produce a chip, and spinning the chip to a filament or a staple. The fibers are said to have multi functionality including electromagnetic wave shielding. For the minerals that can be used a very large group of minerals is mentioned, including layered phyllosilicates. WO02090626 does not describe a mineral clay composition according to the invention and the effect thereof as according to the invention. Moreover, the performance of the known composition of WO0034411 in respect of reducing the electromagnetic hypersensitivity is limited compared to the compositions according to the invention.

Minerals can be classified into various groups according to different criteria. One important group within the minerals is constituted by the group of clays, also known as mineral clays or clay minerals. Clay minerals are very common in sedimentary rocks and in fine-grained metamorphic slate and phyllite. Clays are generally formed by the chemical weathering of silicate-bearing rocks by carbonic acid, but some are formed by hydrothermal activity. Clay minerals belong to the family of phyllosilicates and contain (semi-)continuous two-dimensional tetrahedral sheets or layers of composition $T_2O_5$ (wherein T = Si, Al, Be, ...) with tetrahedra linked by sharing three corners of each, and with the fourth corner pointing in any direction. The two-dimensional tetrahedral sheets, herein also denoted as platelets, are plate-shaped with an average lateral diameter of generally less than 1 micrometer (μm), and in many cases in the range of 0.1- 0.6 μm. The thickness of the platelets is extremely small, approximately 1 nanometer (nm). With packages of several platelets the thickness of individual mineral clay particles can be in the range of a few nm to several decades of nm, for example in the range of 10-30 nm. The size and shape of these platelets can be characterized by standard techniques including e.g. atomic force microscopy (AFM), laser-induced breakdown detection (LIBD), photon correlation spectroscopy (PCS), and inductively coupled plasma/mass spectrometer (ICP/MS) as described in Anal. Chem. 2001, 73, 4338-4347: Size characterization of montmorillonite colloids by different methods, M. Plaschke, T. Schäfer, T. Bundschuh, T. N. Manh, R. Knopp, H. Geckeis and J. I. Kim.

The tetrahedral sheets are linked in the unit structure to octahedral sheets, or to groups of coordinated cations, or individual cations. Clay consists of a variety of phyllosilicate minerals rich in silicon and aluminium oxides and hydroxides sometimes with variable amounts of iron, magnesium, alkali metals, alkaline earths and other cations. Most clay minerals are hydrous aluminium phyllosilicates, which include variable amounts of structural water. This structural water is at least partly present in between aggregates of layers, which water is herein denoted as interlayer water. Clay is also used as a generic term for aggregates of hydrous silicate particles less than about 4 micrometers (μm) in diameter (see e.g.

http://en.wikipedia.org/wiki/Clay). Clays are distinguished from other small particles present in soils such as silt by their small size, flake or layered shape, affinity for water and high plasticity index. Clays are generally heavy in texture yet soft to the touch, and malleable when wet, which means that clays can be shaped easily by hand. When dry, clay becomes firm and when "fired," or hardened by intense heat, a process known as calcination, clay looses its structural water and becomes permanently solid. Calcination of clay is applied for various applications. Clays are also used as reinforement in plastics. For that purpose the aggregates of layers are exfoliated to result into clay with a very large specific surface.

In the context of the present invention a layered phyllosilicate is understood to be a mineral clay consisting of silicate particles, wherein the silicate particles consist of aggregates of closely packed platelets. This in contrast with intercalated and exfoliated phyllosilicates. With "intercalated" is herein understood a organically modified layered clay material having an increase in the interlayer spacing between adjacent platelets due to the presence of organic moieties. With "exfoliated clay" or "exfoliated platelets" is herein understood a clay wherein the silicate particles are disintegrated and the platelets are dispersed mostly in an individual state throughout a carrier material, such as water, a matrix polymer or another medium. In contrast to the layered phyllosilicate in the mineral composition according to the invention, corresponding mineral compositions comprising an exfoliated clay instead of the layered phyllosilicate showed hardly any, or even no effect on the well-being of persons with EHS in the neighbourhood of sources of non-ionizing electromagnetic radiation.

As an example of a mineral clay montmorillonite, is mentioned. Montmorillonite is a hydrated sodium calcium aluminium magnesium silicate hydroxide with the general formula $(Na,Ca)x(Al,Mg)2(Si4O10)(OH)2 \cdot nH2O$. Potassium, iron, and other cations are common substitutes, the exact ratio of the cations varies with source. Montmorillonite, a species from the bentonite group but also known under the generic name bentonite *, is the main constituent of a volcanic ash weathering product, and also occurs as a constituent of a diagenetic-like reaction of vitreous pyroclastic deposits undergone mineral transformations during a burial process.

Montmorillonite's water content is variable and montmorillonite increases greatly in volume when it absorbs water. Similar to other clays, montmorillonite swells with the addition of water. However, some montmorillonites expand considerably more than other clays due to water penetrating into the interlayer molecular spaces and concomitant adsorption. The amount of expansion is largely due to the type and amount of exchangeable cations present in the sample. For instance, montmorillonite obtained from calcium-bentonite, i.e. bentonite wherein the interlayer cation positions are predominantly occupied by Ca and Mg ions, is hardly swellable. This in contrast to montmorillonite obtained from natural sodium-bentonite, or montmorillonite obtained from bentonite whose initial composition of Ca cations has been replaced with Na ions in a so-called alkali activation process. This bentonite is also called activated bentonite. The presence of sodium as the predominant exchangeable cation results in clay swelling to several times its original volume. With the term "exchangeable cations" are herein understood the cations that are present at interlayer positions between the (semi-) continuous two-dimensional tetrahedral sheets or layers of composition $T_2O_5$.

In line with the large variety in composition, clays with different structures and purities are known. Apart from several basic structures, all kinds of regular and irregular stratifications thereof are known. Altogether, there are almost no "pure" clays, and most "natural" clays are mixtures of these different types, as well as mixtures with other weathered minerals. Because of their small lateral particle sizes and variable degrees of crystal perfection, and prior to the development of modern analytical techniques, mineral clays proved extremely difficult to characterize adequately, and consequently the nomenclature has been arbitrarily and sometimes inconsistent. To bring order in the nomenclature of the clay structures an international committee has made recommendations for the nomenclature (see S.W. Bailey, American Mineralogist, Volume 65, pages 1-7, 1980, in his "Summery of recommendations of AIPEA nomenclature committee on clay minerals"). Further herein below the classification scheme of Table 1 in the cited reference will be followed.

Several layered phyllosilicates fall within the following basic groups with the names according to the nomenclature cited in "Bailey": the kaolinite-serpentine group, the pyrophyllite-talc group, the smectite group, the vermiculite group, the mica group, and the chlorite group. Next to that, further large groups are the groups known as the illite group and the mixed-layer group, whereas the palygorskite group constitutes a small group. Examples of mineral clays belonging to these various groups of layered phyllosilicates can be found in "Clays and ceramic raw materials" by W. E. Worrall, Elsevier Appl. Sc. Publ., London, ISBN 1-85166-004-6, 1986, Chapter 3, pages, 30-46, which is included herein by reference. It is noted that in "Worrall" (i.e. the last reference cited above) for the following groups of mineral clays the older names are used: "kaolin type" for the kaolinite-serpentine group, "montmorillonite group" for the smectite group, and "mica" for the combined pyrophyllite-talc group and the mica group. Where there is a discrepancy between the two sources, the nomenclature that is used further herein below is according of "Bailey" (the reference cited here further above).

Following this cited nomenclature, the layered phyllosilicate in the material composition according to the invention suitably is a kaolinite-serpentine, a pyrophyllite-talc, a smectite, a vermiculite or an illite, or a combination of two or more thereof.

Examples of a suitable kaolinite-serpentine are kaolinite, dickite, halloysite chrysotile, lizardite, amesite, or a combination of two or more of these, or any interstratified derivative thereof. Suitably, the pyrophyllite-talc is pyrophyllite or talc. As the smectite suitably montmorillonite, beidellite, saponite, hectorite, sauconite, nontronite or a combination thereof is used. Suitably, the vermiculite is a dioctahedral vermiculite or a trioctahedral vermiculite.

Preferably, the layered phyllosilicate in the mineral clay composition according to the invention comprises a smectite, and/or vermiculite, and/or an illite.

Optionally the layered phyllosilicate comprises a combination of at least two of the smectite, the vermiculite and the illite or a mixed layer structure comprising at least one of the smectite, the vermiculite an the illite.

More preferably the layered phyllosilicate comprises a smectite and/or illite or a combination of two or more thereof, or any mixed-layer structure comprising at least one thereof. Still more preferably layered phyllosilicate comprises a montmorillonite or a mixed-layer structure comprising montmorillonite.

As with natural clays, the layered phyllosilicate in the mineral clay composition according to the invention does not need to consist of a uniform particle size, but can have a particle size distribution. Suitably, the layered phyllosilicate consists of particles the majority of which have a diameter less than 4 $\mu$m. Preferably, the layered phyllosilicate consists of particles having a particle size distribution with a median lateral particle size (d50) of at most 2 $\mu$m, more preferably at most 1 $\mu$m, and still more preferably in the range of 0.03-0.3 $\mu$m. Also more preferably, the layered phyllosilicate consists of particles having a particle size distribution with a d90 of at most 2 $\mu$m, more preferably at most 1 $\mu$m, and still more preferably in the range of 0.03-0.3 $\mu$m. The advantage of the mineral clay composition according to the invention with particle size in these preferred ranges is that the effect on the well-being of living beings is further improved. The median lateral particle size d50 is herein understood to be the lateral particle size, relative to which 50% by weight of the particles has a smaller lateral particle size and 50% by weight of the particles has a larger lateral particle size. Analogously, d90 is understood to be the lateral particle size, relative to which 90% by weight of the particles has a smaller lateral particle size and 10% by weight of the particles has a larger lateral particle size. The particle size distribution and the values for the d50 and d90 of the clay particles of the mineral composition have been measured by photon correlation spectroscopy (PCS) on diluted suspensions of the mineral clays in demineralised / deionised water. Suitably, the measurements are performed with a Zetasizer 3000 from Malvern.

The layered phyllosilicate in the mineral clay composition according to the invention suitably comprises interlayer water between the aggregates of platelets. The interlayer water may be present in a variable amount, depending on the nature of the phyllosilicate, and, for example, in case the mineral clay composition has been contacted with water, depending on the conditions during said contacting with water, and/or in case the mineral clay composition has been subjected to a drying process, to the conditions applied during such a drying process. In case the mineral clay composition has been subjected to a drying process, the drying process may be a calcination process. With a calcination process is herein understood a drying process carried out at elevated temperature for a sufficiently long time, wherein a large amount, or even all, of the interlayer water has been removed and the removal is irreversible.

Suitably, the mineral clay composition comprises interlayer water in an amount of 0.1 - 80 wt.%, preferably 1 - 30 wt.%, more preferably 3 - 10 wt.%, relative to the total weight of the layered phyllosilicate including the interlayer water.

Also preferably, the mineral clay composition is a non-calcined clay. With a non-calcined clay is herein meant natural clay that has not been subjected to a calcination step. The non-calcined clay may optionally have been subjected to a drying step, but the removal of the water in the drying step is reversible upon contacting the dried mineral clay with water.

Also preferably, the layered phyllosilicate that is present in the mineral composition according to the invention has limited swellability, more preferably the layered phyllosilicate is a non-swellable phyllosilicate. In line with that the layered phyllosilicate preferably is a calcium phyllosilicate, more preferably a calcium montmorillonite.

The advantage of the embodiments of the invention with the non-calcined clay, as well as of the preferred layered phyllosilicates having the limited swellability mentioned here above, is that the effect on the well-being of living beings is further improved.

As described above mineral clays can have different forms and different compositions. The mineral clay may also contain various combinations and various amounts of cations, including cations from alkali and alkali earth metals and transition metals, main group elements and lanthanides and actinides. In case of natural clays these combinations and amounts will depend strongly on the source of the mineral clay. In particular the cations from the transition metal elements and the lanthanides and actinides comprise or make up for the paramagnetic ions. These paramagnetic elements occur to be typically incorporated in many mineral clays, like montmorillonite, illite, beidellite, nontronite, saponite, vermiculite, pyrophyllite, paragonite, muscovite, and celadonite.

Suitably, the paramagnetic ions in the layered phyllosilicate comprise cations from transition metal elements and/or rare earth elements from the lanthanide and actinide groups. Suitable transition elements comprise scandium (Sc), titanium (Ti), vanadium (V), manganese (Mn), chromium (Cr), iron (Fe), cobalt (Co), zinc (Zn), zircone (Zr) and hafnium (Hf). Suitable lanthanides include lanthium (La), cerium (Ce), neodymium (Nd), samarium (Sm), europium (Eu), terbium (Tb), dysprosium (Dy) and ytterbium (Yb). Suitable actinides include thorium and uranium.

Preferably, the paramagnetic ions comprise cations from transition metal elements and rare earth elements.

Suitably, the transition metal elements and rare earth elements are present in a total amount in the range of 1-12 wt.%, relative to the total weight of the mineral clay composition. The rare earth elements are preferably present in a total amount of at least 50 ppm, more preferably at least 100 ppm, relative to the total weight of the mineral clay composition. The transition elements suitably consist of iron and other transition elements. Iron is preferably present in an amount of at least 1 wt.%, more preferably at least 3 wt.%, and still more preferably at least 5 wt.%, relative to the total weight of the mineral clay composition. The other transition elements are preferably present in a total amount of at least 100 ppm, more preferably at least 500 ppm, and still more preferably at least 1000 ppm, relative to the total weight of the mineral clay composition.

The advantage of the cations from transition metal elements and rare earth elements being present in the said higher amounts is that the effect of the mineral clay composition on the well-being of living beings is even further improved.

Next to the cations from transition metal elements and/or rare earth elements, the mineral clay composition according to the invention generally comprises alkali and/or alkali earth elements, next to aluminium, silicon and other main group elements. Suitably, the alkali elements comprise sodium, potassium, rubidium and cesium. Suitably, the alkali earth elements comprise calcium, magnesium and barium. Also suitably, the alkali and alkali earth elements are present in a total amount of at least 1 wt.%, preferably at least 2 wt.%, relative to the total weight of the mineral clay composition. Aluminium and silicon are suitably present in a total amount in the range of 20-35 wt.% relative to the total weight of the mineral clay composition.

In a preferred embodiment of the invention, the paramagnetic ions in the layered phyllosilicate comprise cations from transition metal elements, comprising iron and other transition metal elements, and rare earth elements, wherein iron is present in an amount of at least 1 wt.%, the other transition elements are present in a total amount of at least 100 ppm, and the rare earth elements are present in a total amount of at least 50 ppm, wherein the weight percentages and ppm's are relative to the weight of the layered phyllosilicate.

Preferably, the transition metal elements and rare earth elements are present in a total amount between 1 and 12 wt.%, relative to the weight of the layered phyllosilicate.

The mineral clay composition according to the invention may comprise, next to layered phyllosilicate, or intercalated with the layered phyllosilicate, other mineral components.

Suitably, the mineral components other than the layered phyllosilicate are present in the mineral clay composition in a limited amount, preferably less than 20 wt.%, more preferably less than 10 or 5 wt.% and most preferably less than 2 wt.%, relative to the weight of the layered phyllosilicate.

Also preferably, the other mineral components have a low magnetic susceptibility. Magnetic susceptibility is a measure of the magnetic response of a material to an external magnetic field. For ferri-and ferromagnetic materials, the magnetic response is very high. For paramagnetic and diamagnetic materials the magnetic response is much lower, and can be even negative for diamagnetic materials.

More preferably, the other mineral components have a weight average mass magnetic susceptibility, the absolute value of which is in the range of 0 - 1000 $m^3kg^{-1}$, more preferably 0 - 100 $m^3kg^{-1}$, and still more preferably 0 - 10 $m^3kg^{-1}$.

Herein is the mass magnetic susceptibility, represented by the symbol $X$, defined as the ratio of the material magnetization J to the weak external magnetic field $H$:

$$J = X. H$$

wherein $J$ is the magnetic dipole moment per unit mass, measured in amperes per meter and $H$ is the applied field, also measured in amperes per meter. (see e.g. C.P. Hunt, B.M. Moskowitz and S.K. Banerjee, in Magnetic properties of Rocks and Minerals, American Geophysical Union, (1995) 189-204).

The advantage of the mass magnetic susceptibility for the other mineral components in these preferred ranges is that the effect of the mineral clay composition on the well-being of living beings is better retained or even further improved.

Other mineral components having such a low mass magnetic susceptibility and suitable for being comprised in the mineral clay composition according to the invention are, for example, quartz, synthetic hectorite, and laponite. Other examples of diamagnetic and paramagnetic materials with low mass magnetic susceptibility can be found, for example in P.S. Calllahan, Paramagnetism, Rediscovering Nature's secret force of growth" and the reference of "Hunt et al", cited above. More preferably, the other mineral components comprise an alpha-quartz and/or a beta-quartz. The higher the purity of the quartz, the lower the volume magnetic susceptibility and the better the effect of the mineral clay composition according to the invention on the well-being of living beings is retained or even further improved.

In a preferred embodiment of the invention, the mineral clay composition consists of the layered phyllosilicate, quartz and 0-2 wt.% other mineral components, wherein the weight percentages relate to the total weight of the mineral clay composition and add up to 100 wt.%. More preferably, the mineral clay composition consists of 97-100 wt.% of the layered phyllosilicate, 1-2 wt.% quartz and 0-1 wt.% other mineral components, wherein the weight percentages relate to the total weight of the mineral clay composition and add up to 100 wt.%.

Suitably, materials having such low volume magnetic susceptibility as highly pure quartz may be present in the mineral clay composition higher than 10 wt.%, or even higher than 20 wt.%, relative to the total weight of the mineral clay composition.

The quartz content of a clay material can be quantified by comparing the diffraction peak intensity of the quartz X-ray diffraction patterns, as is described, for example, in US-2002/0028870-A1, part [0036].

In another preferred embodiment of the invention, the mineral clay composition is essentially free of ferromagnetic and ferrimagnetic components. A ferromagnetic or ferrimagnetic component is herein understood to be a material with a mass magnetic susceptibility of at least 10,000 $m^3kg^{-1}$. With the words "essentially free of ferromagnetic and ferrimagnetic components" is herein understood that the mineral clay composition comprises ferromagnetic and ferrimagnetic components in such a low amount, that the well-being effect of the paramagnetic ions is not hampered in a significant extent. The maximum amount of ferromagnetic and ferrimagnetic components that still results in insignificant hampering of the said effect depends on the magnetic susceptibility of the ferromagnetic and ferrimagnetic components and the amount of paramagnetic ions present in the mineral clay composition. Suitably, the mineral clay composition comprises ferromagnetic and ferrimagnetic components in an amount of at most 2 wt.%, preferably at most 1 wt.%, more preferably at most 0.1 wt.%, and still more preferably 0-0.01 wt.%, relative to the weight of the layered phyllosilicate.

In a more preferred embodiment these two preferred embodiments mentioned here above are combined and the layered phyllosilicate is a montmorillonite or a combination of montmorillonite with illite.

The mineral clay composition according to the invention preferably has a conductivity, measured in demineralised water at a concentration of 1 g of the mineral clay composition relative to the total weight of the demineralised water and the mineral clay composition, of at most 10 $\mu$S/cm, more preferably at most 5 $\mu$S/cm, and still more preferably at most 2 $\mu$S/cm, and most preferably at most 1 $\mu$S/cm. The advantage of the lower conductivity is that the effect of the mineral clay composition on the well-being of living beings is even further improved.

The mineral clay composition according to the invention can be made from synthetic clays and from natural clays. As described above mineral clays in natural sources generally contain mixtures of minerals, salts, metal oxides and other impurities. Minerals others than the layered silicates mentioned above are minerals from the following groups, classified according to the chemical compositions: carbonates, sulfides, oxides, halides, sulfates, nitrates, borates, tungstates, molybdates, phosphates, arsenates, and vanadates, as well as silicates with crystal structures different from the layered phyllosilicates according to the invention, for example nesosilicates, sorosilicates, cyclosilicates, inosilicates, and tectosilicates. Salts are for example halite, apatite, calcite, sodium carbonate and other salts. Metal oxides are for examples ferric oxides and other oxides. Other impurities generally occurring in natural clays are organic matter and other impurities.

The mineral clay composition that is suitable for the present invention can be made from natural clays comprising a layered phyllosilicate comprising paramagnetic ions with a process comprising a separation step. The separation step may comprise a sedimentation step and/or a magnetic separation step. Such a process is known per se, from e.g. US-2002/0028870-A1. In the known process of US-2002/0028870-A1, a clay, for example montmorillonite, is dispersed in water at about 6-10 wt.% concentration to form a slurry. The clay slurry is passed through a series of hydrocyclones to remove larger particles, while retaining clay particles having a size of about 100 microns, or less. The clay is exchanged to 95% Na-form in an ion exchange column and centrifuged. By varying the slurry concentration, the flow rate through the hydrocyclone, and speed of the centrifuge, clays with low quartz content and small lateral particle size are said to have been achieved. By incorporating a cryogenic magnetic separation step, further impurities including iron oxides are selectively removed, thereby producing a super-clean clay material. The known process is aimed at removing quartz and iron oxides to produce a clean clay that can be used in polymer compositions meanwhile achieving low haze and improved oxygen barrier properties.

A disadvantage of the known process is that the resulting purified clay is useless for improving the well-being of living beings.

This disadvantage has been overcome with the process according to the invention, comprising, in this order (i) a dispersion step, (ii) a sonifcation step, (iii) a separation step and (iv) a percolation step. The mineral clay composition prepared with the process according to the invention has the advantageous effect of improving the well-being of living beings as described above. It is essential that the clay that is used as the starting material neither is a calcined clay nor is ion-exchanged with alkali ions prior to or during the process.

It has been observed that with the sonification step the ion-exchange step can be omitted, and that combining sonification with a sedimentation and/or magnetic separation step results in a layered phyllosilicate separated from most other minerals including ferro- and ferrrimagnetic compounds generally present in natural clay. Quartz particles residues may still be present, but these have not shown to be a particular problem for the present invention. In particular quartz particles with small lateral particle size with an alpha and/or beta polymorphology have been shown advantageous for the performance of the mineral clay composition in respect of the well-being of living beings. In case a highly purified layered phyllosilicate is desired, the sonification and sedimentation and/or magnetic separation step can be repeated at least one time. It has also been observed that layered phyllosilicates in natural clays generally have a high conductivity in the range of 100-150 $\mu$S/cm, or even higher, measured in demineralised/ deionised water at a concentration of 1 g of the mineral clay composition relative to the total weight of the non-conductive water. These layered phyllosilicates don't perform well in improving the well-being of living beings. However, when the conductivity of the layered phyllosilicate is reduced in combination with the rather complete absence of ferro- and ferri-magnetic components as according to the invention, the said performance is surprisingly good.

The process according to the invention can be performed as follows, starting with (I) dispersing a natural clay comprising a layered phyllosilicate comprising paramagnetic ions in water thereby making a suspension of the clay in demineralized water, (II) subjecting the suspension to sonic forces thereby obtaining a sonic-treated suspension, (III) subjecting the sonic-treated suspension to gravitational forces thereby forming a layered system comprising a supernatant liquid and optionally a sediment, the supernatant liquid consisting of different layers, at least one layer of the different layers comprising day residues comprising layered phyllosilicate, isolating the at least one layer, and (IV) percolating the at least one layer with demineralized water until the percolated layer, optionally diluted with demineralized water, has a conductivity, measured at a concentration of 1 g of the clay residues relative to the total weight of the demineralized water and the mineral clay composition, of at most 20 $\mu$S/m.

Advantageously, the steps (II) and (III), and/or (IV) are repeated at least one time, and preferably more than one time, thereby obtaining respectively a mineral clay composition with smaller particles and/or a lower conductivity, with the advantage that the resulting mineral clay composition has a further improved effect on the well-being of living beings.

Further details about how the process according to the invention, or preferred embodiments thereof, can be executed are given below.

A clay comprising a layered phyllosilicate, preferably montmorillonite, illite or mixture of montmorillonite/illite, more preferably 5-90 wt.%; and also preferably containing quartz, more preferably 1.0 till 20 wt.%, wherein the wt.% is relative to the total weight of the clay, mined from selected sites, is dispersed in water to form a clay slurry (preferably at a concentration of 2-3 wt.% of clay relative to the total weight of the clay slurry). The clay slurry is stirred and/or shaken until a suspension of clay particles in water is obtained. Depending on time and intensiveness of the stirring and shaking the resulting slurry can be coarser or finer. During the stirring and shaking, the dispersion may have a temperature varying over a large range, and suitably is in the range of 5 - 90°C, although the temperature may be higher than 90°C, as well that it may be lower than 5°C. Preferably, the temperature is in the range of 10-60°C, more preferably 15 - 40°C, and most conveniently at 18 - 22°C.

These preferred temperature ranges also apply for the other steps in the process according to the invention.

The clay suspension obtained after the stirring and shaking can be further disaggregated / deagglomerated in a sonification process by using ultrasone frequencies. The sonification process generally will lead to a clay suspension with smaller particles suspended in the water, but can also lead to a sediment of insoluble non-dispersible material. Such sediment can optionally be removed prior to further steps. For the removal any method that is suitable for removing sediment from a liquid may be applied. Suitably, the sediment is removed by filtration or by decanting the liquid.

The clay suspension thus obtained after the sonification and optional sediment removal, can be sorted according to weight and size of the clay particles and the mineral clays can be separated from the other non-clay minerals. This separation can be done by allowing the larger and heavier particles to settle by gravitational forces. Settlement by gravitational forces can be done by putting the sonificated suspension in a separation column and let it rest for longer time. Alternatively, the clay suspension can be put in a centrifuge and be subjected to a large centrifugal force. The gravitational force that is applied may vary over a very wide range, and is suitably between, for example, 1 G, applicable when the suspension is in rest, and 50,000 G. Finer fractions can be obtained by centrifuging at higher gravitational forces, near 4,000-5,000 G, separating particles of impurities of having a size greater than about 1-2 microns. Finest fractions are obtained with dimensions of 0.05 till 0.15 micron by separating finest fractions from medium/coarser fractions by the ultra or super centrifuge method at 12,000 till 50,000 G spinning during 1 till 5 hours. Settling times required for separating various size ranges are based on Stokes' law and are presented in extensive nomographs and tables by Jackson (1979) (see Stokes/Jackson: document: 84.026 Particle Size Distribution, under: http://sis.agr.gc.ca/cansis/publications/manuals/analytical 84-026.pdf)

Optionally the disagglomerated clay-suspension obtained after the sonification step is first diluted in water, before the centrifugation process. Suitably, the water that is used is demineralised/ deionised, and also suitably the water has a temperature between 5 - 90°C, although the temperature may be higher than 90°C, as well that it may be lower than 5°C. Preferably, the temperature is in the range of 10-60°C, more preferably 15 - 40°C, and most conveniently at 18 - 22°C. Also preferably the diluted suspension is kept at that temperature for at least 1 - 2 hours. The settlement by gravitational forces results in a clay suspension in water, wherein the suspension comprises layers with a different composition. It has been observed during the invention that the upper layer, or layers, comprises, or comprise, clay material that is more effective in respect of the well-being of living being in respect of non-ionising electromagnetic radiation. The upper layer or upper layers can be separated from the other layers, and when necessary the sonification and settling steps can be repeated with the upper layer or layers. Herein the separated upper layers are optionally diluted with water prior to repeating the steps. When done so the water preferably has a conductivity of 0.2-0.5 $\mu$S/cm. In the ultimately fine suspensions, the upper fraction that is isolated is a stable colloid of the mineral clay in water.

The resulting isolated fractions are where necessary, and otherwise optionally, treated with water of low conductivity thereby reducing the conductivity of the mineral clay suspension in water. The treatment can be performed, for instance in a percolation unit, comprising a container and a filter, wherein the filter is fine enough to retain the suspended mineral clay in the container, while water of low conductivity can be added to the container, and excessive water, optionally comprising conductive ions, is removed form the container by passing through the filter. Optionally, the removal of the excessive water is performed under pressure. The mentioned treatment with water is optionally repeated at least one more time, thereby obtaining a suspension of the mineral clay in water having a low conductivity. Suitably, as the water of low conductivity double-deionised water with a conductivity of 0.2-0.5 $\mu$S/cm is used.

For the isolation of the upper layer or layers also an automated monitory system for fraction recovery can be used. Suitably, the automated monitory system is a Beckman Fraction recovery system with a flow cell equipped with a UV photometer and recorder. Another efficient method of fractionation can be done by using continuous flow rotors allowing processing of single volumes of 5 till 20 litres.

The isolated fractions and the mineral clay therein can be characterized with different techniques, for example with infrared spectroscopy (IR), XRD, XRF, electron spin resonance (ESR), transmission electron microscopy (TEM), scanning electron microscopy (SEM), light microscopy, element analysis and particle size analysis. For the latter for example a Zetasizer 3000 from Malvern can be used. The conductivity is measured by a Konduktometer 703, electrode 4-Pol Messzelle of the company Knick.

The composition is isolated from the water suspension and ready to be incorporated in water or in a compound or in a small container.

The invention also relates to material composition comprising a carrier material and the mineral clay composition according to the invention. It has been found that the mineral clay composition according to the invention can be dispersed in a carrier material in low concentrations, while still retaining its positive effect on the well-being of living beings.

Carrier materials that are suitable for use in the material composition according to the invention include, for example, diamagnetic materials such as demineralised water, mineral components with a low magnetic susceptibility, for example, hectorite and laponite, preferably synthetic hectorite or synthetic laponite, and polymers with a low polarity, for example polyethylene, or any combination thereof.

Suitably, the material composition comprises the mineral clay composition in an amount of 0.01-50 wt.%, preferably 0.1 -10 wt. %, relative to the total weight of the material composition. Also suitably the material composition comprises the carrier material in an amount of 50-99.99 wt.%, preferably 90-99.9 wt. %, relative to the total weight of the material composition.

In one preferred embodiment of the invention, the material composition is a suspension of the mineral clay composition according to the invention in water, preferably comprising the mineral clay composition in an amount of 0.2 -1.0 wt. %, relative to the weight of the material composition, and also having a conductivity, measured on the suspension, of at most 20 $\mu$S/cm per gram mineral clay composition in 100 g suspension. Also preferably, the suspension comprises hectorite and / or laponite.

An advantage of the suspension of the mineral clay composition in water according to the invention is that the observed EHS performance is retained even after the suspension is subjected to heating to temperatures above 60 °C. This in contrast with the water solution of lanthanide compounds according to the state of the art described herein further above. In another preferred embodiment of the invention, the material composition is a mixture of the mineral clay composition and quartz, preferably comprising the mineral clay composition in an amount of 1-20 wt. %, more preferably 3-10 wt.%, relative to the weight of the material composition. Also preferably, the quartz is an alpha quartz and/or a beta-quartz polymorph .

In a further preferred embodiment of the invention, the material composition is a dispersion of the mineral clay composition and polyethylene, preferably comprising the mineral clay composition in an amount of 1-10wt. %, more preferably 3-5 wt.%, relative to the weight of the material composition.

Preferably, the mineral clay composition in the material composition according to the invention or any of the preferred embodiments thereof, is any of the preferred mineral clay composition described here further above.

The invention also relates to the use of a mineral clay composition according to the invention or any preferred embodiments thereof in a product designed for improving the well-being of living beings. The invention relates in particular to the use of a mineral clay composition according to the invention or any preferred embodiments thereof in the neighbourhood of electrical and electronic devices emitting non-ionising electromagnetic radiation.

The invention also relates to the use of the mineral clay composition according to the invention in leisure articles, textile products, shoes and clothing, personal care products, polymer compositions and articles made thereof, nutrition products, food and feed products, ready-made packaging for personal use, medicines, drugs, low-, medium- and high-voltage cables, WIFI/WLAN applications, mobile phones, telecommunication antennae, computer screens, satellites, video display units, tv-monitors, microwave ovens, transformers, space stations and so on.

The invention also relates to articles, such as textile products, shoes and clothing, personal care products, polymer compositions and articles made thereof, food and feed products, and ready-made packaging for personal use, medicines, drugs, low-, medium- and high-voltage cables, mobile phones, WIFI/WLAN applications, telecommunication antennae, computer screens, satellites, video display units, tv-monitors, microwave ovens, transformers, space stations comprising a mineral clay composition according to the invention or any preferred embodiment thereof.

The invention also relates to a packaging comprising a non-metallic container and the mineral clay composition according to the invention or any of the preferred embodiments thereof. The advantage of this packaging is that it can be used by living beings, in particular those with "electromagnetic hypersensitivity", for improving their well-being, in particular in the neighbourhood of electrical and electronic devices emitting non-ionising electromagnetic radiation. A further advantage is that the packing according to the invention can be carried on the body of an individual, thereby continuously contributing to the well-being of the individual, or can be placed inside the room comprising the device or near the device, thereby contributing to the well-being of those individuals that have to work or are present in the room or nearby the device.

The non-metallic container suitably is a plastic container or a carton box. A plastic container is suitably used when the material composition is a liquid, such as a suspension in water. A carton box is suitably used when the material composition is a solid material, such as dispersion in a polymer or a mineral.

The invention is further illustrated with the following examples and comparative experiments.

Methods

Conductivity

The conductivity of the mineral clay compositions was determined in diluted aqueous suspensions of 1 g of the mineral clay compositions in 100 g demineralised/ deionised water with a conductivity of 0.2 μS/cm. The conductivity was measured with the use of a Konduktometer 703, electrode 4-Pol Messzelle from the company Knick.

Particle Size

The particle size distribution and d50 of the mineral clay compositions was determined in diluted aqueous suspensions of the mineral clay compositions in water by Zetasizer 3000 from Malvern.

Cation composition.

The composition of the elements making up for the cations in the mineral clay compositions was determined by INAA (instrumental neutron activation analysis).

Starting materials.

Clay A    is a natural clay comprising 36±1 wt.% phyllosilicate.
Clay B    is a natural clay comprising 65±1 wt.% phyllosilicate.

Experiment I

20 g of clay A was dispersed in 980 g demineralised / deionised water with a conductivity of 0.2-0.5 μS/cm to form 1000 g of a clay slurry in water at a concentration of 2.0 wt.% of clay relative to the total weight of the clay slurry. The temperature of the slurry was kept at 20 ± 2°C. The slurry was stirred and shaken in a reciprocal shaker of the type KS10 of company Edmund Bühler, 7400 Tübingen, for 16 till 20 hours at 200 rpm. The resulting dispersion was separated in 10 batches of 100 g each, and each batch was put in a sonification-probe with a diameter of 13 mm and the probes filed with the batches were put in a vessel externally cooled by water of 15°C. Then the batches were sonificated in a Sonics Vibracell VCX750 at an amplitude of 40%, with an intermittent cycle of 15 seconds on and 15 seconds off, and that repeated for a total sonification-time of 20 minutes. The suspension obtained after sonification was first put in a column and then left to settle in rest for 16-24 hours.

After this settling step, the suspension showed 5 layers with different colours and transparencies. The four upper layers were removed from the column by pumping, starting with the most upper layer, thereby taking care that disturbance of and mix-up with the other layers was as minimal as possible. The residual fifth layer was obtained as the residual layer. The layers, apart from visual detection could also be discriminated by measuring the refractive index, by IR analysis and/or by UV. The most upper layer, which was almost transparent, showed to amount to about 80 g and to primarily contain salts dissolved in the water and only a minimal amount of other minerals. The second upper layer showed to amount to about 700 g and primarily contained layered phyllosicates. The third upper layer showed to amount to about 90 g and primarily contained phyllosilicates other than the layered phyllosilicates and fine quartz, the fourth contained mainly finer silicates. The fifth layer, i.e. the sediment, contained mainly coarser silicates.

From the various layers the second upper layer was used in the further experiments. The mineral clay composition in the second upper layer was isolated by evaporation of the water by boiling and heating the aqueous suspension up to 120°C thereby evaporating the water and resulting in the mineral clay composition as a residue in an amount of 250 mg.

The mineral clay composition thus isolated is herein referred to as Semi-finished product A. Semi-finished product A, obtained from Clay A by the process described above, was analysed by IR, XRD, XRF, TEM and SEM and showed to be a mineral clay composition comprising a layered phyllosilicate comprising 97 wt.% montmorillonite, and some traces of illite and quartz. The particle size d50 of the mineral clay composition, measured by Zetasizer 3000 from Malvern was 0.4 $\mu$m. The conductivity of the mineral clay composition, at a concentration of 1 g of the composition in 100 g demineralised / deionised water with a conductivity of 0.2 $\mu$S/cm, was 90 $\mu$S/cm. The cation composition of the layered phyllosilicate in Semi-finished product A was analysed by INAA (instrumental neutron activation analysis) and is reported in Table 1.

Experiment II

Experiment I was repeated except that instead of Clay A Clay B was used.

Also in this case 5 layers were observed. From the various layers the second upper layer was used in the further experiments. The mineral clay composition in the second upper layer was isolated by evaporation of the water by boiling and heating the aqueous suspension up to 120°C thereby evaporating the water and resulting in the mineral clay composition as a residue in an amount of 475 mg.

The mineral clay composition thus isolated is herein referred to as Semi-finished product B. Semi-finished product B, obtained from Clay B by the process described above, was analysed by IR, XRD, XRF, TEM and SEM and showed to be a mineral clay composition comprising a layered phyllosilicate comprising 90 wt.% montmorillonite, and other components consisting primarily of illite, kaolinite and quartz. The particle size d50 of the mineral clay composition, measured by Zetasizer 3000 from Malvern was 1.0 $\mu$m. The conductivity of the mineral clay composition, at a concentration of 1 g of the composition in 100 g demineralised / deionised water with a conductivity of 0.2 $\mu$S/cm, was 115 $\mu$S/cm. The cation composition of the layered phyllosilicate in Semifinished product B was analysed by INAA (instrumental neutron activation analysis) and is also reported in Table 1.

Table I. Cation composition of the Semi-finished products A and B (amounts of the elements are in ppm relative to the total weight of the mineral clay composition).

| Alkali metal elements: | Semi-finished products A | Semi-finished products B |
|---|---|---|
| Na | 1000 | 1000 |
| K | 20.000 | 10.000 |
| Rb | 180 | 50 |
| Cs | 17 | 3.0 |
| Mg | 10.000 | 10.000 |
| Ca | 5000 | 5000 |
| Ba | 200 | 80 |
| | | |
| Transition metal elements: | | |
| Sc | 15 | 5.0 |
| Ti | 5,000 | 2,000 |
| V | 200 | 20 |
| Cr | 150 | 50 |
| Mn | 500 | 100 |

(continued)

| Transition metal elements: | | |
|---|---|---|
| Fe | 60,000 | 20,000 |
| Co | 15 | 2.0 |
| Zn | 200 | 50 |
| Zr | 170 | 50 |
| Hf | 1.0 | 1.0 |
| | | |
| Lanthanides: | | |
| La | 30 | 12 |
| Ce | 70 | 30 |
| Nd | 30 | 12 |
| Sm | 6.0 | 3.0 |
| Eu | 1.2 | 0.4 |
| Tb | 0.6 | 0.3 |
| Dy | 4.0 | 2.0 |
| Yb | 2.0 | 1.2 |
| Lu | 0.4 | 0.1 |
| | | |
| Actinides: | | |
| Th | 10 | 6.0 |
| U | 10 | 1.0 |
| | | |
| Main group elements: | | |
| Al | > 80,000 | > 80,000 |
| Si | > 200,000 | > 200,000 |
| Sb | 0.7 | 0.4 |

Example I

The second upper layer of Experiment I was fed to a micro filtration process using a filter-house of company Pall Life Sciences article nr. PALL40011, a cellulosenitrate membrane of company Sartorius AG 37070, Germany, with a pore-sizes of 0.10 micrometer. The suspension is stirred in the filter-house with a rotor in which a magnet has been incorporated. The micro filtration process is fed by a flow of double-deionised water with a conductivity of 0.2 $\mu$S/cm with a flow-rate of 3.3 litre per 24 hour during 48 hours. Then the aqueous solution was taken from the percolation unit and the mineral clay composition in the aqueous solution was isolated by evaporating the water of the suspension by boiling and heating the mineral composition up to 120 grad Celsius which results in an amount of 250 mg mineral composition. The mineral clay composition thus isolated has a median particle size d50 1 $\mu$m and a conductivity of 18 $\mu$S/cm. The thus isolated mineral clay composition was incorporated in a mixture of deionised water and hectorite (0.3% mineral composition and 1% hectorite) and put in a container with a content of 2 ml and made of polyethylene.

Examples II-III

Example I was repeated except that the applied percolation time was extended to respectively 96 and 312 hours. The relevant parameters for the mineral clay composition thus obtained have been collected in Table 2. In the same way as in Example I, the isolated mineral clay compositions of Example II and III were incorporated in a mixture of deionised water and hectorite (0.3% mineral composition and 1% hectorite) and put in a container with a content of 2 ml and made of polyethylene.

Examples IV-VI

Examples I-III were repeated except that instead of the second layer of Experiment I the second layer of Experiment II was used. The relevant parameters for the mineral clay composition thus obtained for Examples IV-VI have been collected in Table 2. In the same way as in Example I, the isolated mineral clay compositions of Example IV-VI were incorporated in a mixture of deionised water and hectorite (0.3% mineral composition and 1% hectorite) and put in a container with a content of 2 ml and made of polyethylene.

Comparative Experiment A (CE A)

For Comparative Experiment A (CE-A) the Semi-finished product A obtained in Experiment I was incorporated in a mixture of water and hectorite (0.3% mineral composition and 1% hectorite) and put in a container with a content of 10 ml and made of polyethylene.

Comparative Experiment B (CE B)

For Comparative Experiment B (CE B), Comparative Experiment A was repeated except that instead of Semi-finished product A, Semi-finished product B obtained in Experiment II was used.

Comparative Experiment C (CE C)

For Comparative Experiment C (CE C), a diluted solution of lanthanide compounds in deionised/demineralised water according to EP-0551668-A1 was used.

Table 2. Composition and main characteristics of mineral compositions according to Examples I-VI and Comparative Experiments A, B and C and test results obtained in EHS Performance tests.

| Examples (EX) and Comparative Experiments (CA) | CE-A | EX I | EX II | EX III | CE B | EX IV | EX V | EX VI | CE C |
|---|---|---|---|---|---|---|---|---|---|
| Based on | | | | | | | | | |
| Semi-finished product A | + | + | + | + | | | | | |
| Semi-finished product B | | | | | + | + | + | + | |
| Composition C | | | | | | | | | + |
| Percolation time and properties of resulting Semi-finished products | | | | | | | | | |
| Percolation time (hours) | 0 | 48 | 96 | 312 | 0 | 48 | 96 | 312 | |
| Lateral particle size (d50) ($\mu$m) | 0.4 | 0.4 | 0.4 | 0.4 | 1.0 | 1.0 | 1.0 | 1.0 | n.a.[a)] |
| Conductivity 1g/100g ($\mu$S/cm) | 90 | 18 | 5 | 1.3 | 115 | 20 | 6.5 | 1.9 | |
| Rating of EHS Performance [b)] | | | | | | | | | |
| As such | +/- | + | ++ | +++ | - | +/- | + | +/++ | +/-- |

(continued)

| Rating of EHS Performance b) | | | | | | | | | |
|---|---|---|---|---|---|---|---|---|---|
| After heating for 6 hours at 120°C | +/- | + | ++ | +++ | - | +/- | + | +/++ | - |
| a) n.a. = not applicable. b) Rating of EHS Performance: -: no effect; +/- minimal effect; + reasonable effect; ++ good effect; +++ very good effect. | | | | | | | | | |

Well-being test 1

A small group of 5 persons out of an arbitrary group of 250 employees claimed to be aware of man-made electromagnetic fields effecting their well-being and cognitive functions. Perceived feelings by these persons include dizziness, headache, concentration difficulties and other problems in a surrounding of non-ionising radiation. The said group of 5 persons was involved in this test. When the persons were bearing a small container comprising a water suspension of the mineral compositions reported in Table 2, the complaints reduced or neutralised completely to a natural situation without electromagnetic radiating equipment in their neighbourhood. The average rating for the performance of these mineral compositions in the above electromagnetic hypersensitivity tests is also given in Table 2.

The results of Table 2 indicate that, based on the trend within Examples I-III, and also for Examples IV-VI, the performance of the mineral compositions in respect of EHS reduction gets better when the conductivity is lower, and also that the results get better, based on comparison of Examples I-III with Examples IV-VI, when the concentration of the transition metal elements and the lanthanides and optionally actinides are higher.

Moreover, the results are also better than composition C according to the state of the art, comprising a solution of lanthanide salts.

Well being test 2

Small plastic containers comprising compositions were prepared as in Examples I-VI and Comparative Experiments A-B and subjected to 90°C for 6 hours. The same heat treatment was applied to a small plastic container containing the composition of Comparative Experiment C. After the heat treatment the well being test was repeated. The results have been collected in Table 2. The results show that the EHS performance of Comparative Experiment C has disappeared after the heat treatment, whereas the EHS performances of the compositions of Examples I-VI according to the invention have been retained.

Well being test 3

In order to perform the test in a more scientific manner, blind and double blind tests have been executed as follows. For this test the same group of the 5 EHS sensitive persons was involved, which persons were exposed to the non-ionising electromagnetic waves emitted by different apparatus with different field strength: (1) electrical cables at 1-5 $\mu$Tesla, (2) a DECT telephone at $10^4$ $\mu$W/m2 at a distance of 40 cm, (3) a transformer station at 0.5 $\mu$Tesla (4) an electrical ionisator at 2.0 $\mu$Tesla (5) 1 kV low-voltage electrical cables.

In the well-being test a material composition according to the invention was compared with an placebo. The material composition according to the invention consisted of 0.3 wt.% of the mineral clay composition of Example III, 1.0 wt.% hectorite and demineralised/deionised water, together making up for 100 wt.%, wherein all the wt.% are relative to the total weight of the material composition. The mineral clay composition, the hectorite and the demineralised/deionised water were mixed to form a gel. 1.5 g of the gel was put in a plastic container of 1.5 cc made of polyethylene. This container will be denoted herein as Container X.

For the comparison test a placebo was prepared by filling an identical plastic container with clay D having no ions incorporated in or in between the crystal lattices and demineralised/deionised water. This container will be denoted herein as Container Y.

A test leader was appointed to watch over the trial. The electricity was turned on during the trial. The group of the selected 5 EHS sensitive persons were placed blind and double blind at a fixed distance near the apparatus involved in be tested. This distance was 30-50 cm for the apparatus (1), (2), (4) and (5), and 40 meters in case of apparatus (3).

In the blind and double blind tests plastic containers with either the composition according to the invention (container X) or with the placebo (container Y) were positioned either on the living body, which was the case for the tests with apparatus (3), or near or at the other apparatus involved in the tests, as follows: the containers were positioned concentrically around a part of the cables of the transformer (1), around a part of the cables of the high frequency generator of the DECT-telephone (2), around a part of the cables of the high voltage transformer of the ionisator (4) around a part of the 1 KV low voltage cable (5).

The choice whether container X or container Y was placed was determined by a third person by throwing a coin. The test leader and the test-persons did not know whether container X or container Y had been placed near the electrical device, only the third person knew. The type of the container was invisible for the test-person, since the container was visually shielded. The tests have been carrier out blind and double blind, each test person has been tested during 3 till 8 times for one type of device. The results have been summarized in Table 3.

Table 3. Results of well-being tests to test functioning of composition positioned near several electrical devices.

| Emitter | Test persons | Number of observations | Right [a] |
|---|---|---|---|
| Transformer | A, B, C | 25 | 14 |
| DECT telephone | A, B, C | 12 | 10 |
| Transformer | A, D | 8 | 6 |
| station | A, E | 6 | 5 |
| ionisator | A | 7 | 6 |
| Electrical cable | | | |
| Total | | 58 | 41 |

*"right" means that the test-person, based on his/her perception whether his/her well-being was influenced or not, predicted correctly whether the container was container X (comprising material according Example I) or container Y (blank/placebo).*

Based on these test results it can be calculated statistically whether the test discriminates between a working composition according to the invention and a placebo. Based on the fact that 41 out of 58 experiments were correct, instead of around 50% (or only 29 experiments) in case of an insignificant effect, means that there is a probability of only 0.1 % that the observed affects would be non-existing.

<u>Well-being test 4</u>

4 other EHS sensitive test-persons were exposed in blind tests to electromagnetic waves with a power density of $10^{-4}$ till $10^{+2}$ mW/cm$^2$ at frequencies of 6Hz, 50Hz, 1 kHz, 1 MHz and 1 GHz. A Solatron S1 1260 frequency emitter and/or A 3310B of Hewlett-Packard 1-50 Hz has been used as function generators, with a power density of $10^{-5}$ till $10^{+2}$ mW/cm$^2$ were used as a generator; a solenoid or Helmholtz coil has been used as emitter with a diameter of copper wire of 0.55 mm, 87 windings, diameter 17.5 cm, impedance of 166.5 Ohm at 10 kHz and a 50 Hz 220 V coil: LX1 D09 as used in an electromagnetic switch. A number of 40 tests were carried out at the mentioned frequencies, meanwhile placing a container Z, comprising a placebo consisting of synthetic hectorite without paramagnetic ions, or container X comprising the material composition with the mineral clay composition according to Example III, in the core of the magnetic field of the solenoid/coil. The test persons were exposed at a distance of 20 cm from the solenoid to the electromagnetic waves transmitted by the solenoid. It could be concluded qualitatively that when container Z was placed the test persons claimed the following perceptions: an increase of stress, less relaxed, less calm for all above mentioned frequencies, whereas when container X was placed, the test persons claimed a decrease of stress, and a relaxed, calm feeling for all above mentioned frequencies.

**Claims**

1. Mineral clay composition comprising a layered phyllosilicate comprising paramagnetic ions, and having a conductivity, measured in non-conductive water at a concentration of 1 wt.% of the mineral clay composition relative to the total weight of the non-conductive water and the mineral clay composition, of at most 20 $\mu$S/cm.

2. Mineral clay composition according to claim 1, wherein the layered phyllosilicate comprises a smectite, and/or vermiculite, and/or an illite.

3. Mineral clay composition according to claim 1 or 2, wherein the layered phyllosilicate consists of particles having a particle size distribution with a median lateral particle size (d50) of at most 2 $\mu$m.

4. Mineral clay composition according to any of the claims 1-3, wherein the mineral clay composition is a non-calcined clay.

5. Mineral clay composition according to any of the claims 1 - 4, wherein the paramagnetic ions comprise cations from transition metal elements, comprising iron and other transition metal elements, and rare earth elements, wherein iron is present in an amount of at least 1 wt.%, the other transition elements are present in a total amount of at least 100 ppm, and the rare earth elements are present in a total amount of at least 50 ppm, wherein the weight percentages and ppm's are relative to the weight of the layered phyllosilicate.

6. Mineral clay composition according to any of the claims 1 - 5, wherein the mineral clay composition comprises mineral components other than the layered phyllosilicate in an amount of less than 20 wt.%, relative to the total weight of the mineral clay composition.

7. Mineral clay composition according to any of the claims 1-6, wherein the other mineral components have a weight average mass magnetic susceptibility, the absolute value of which is in the range of 0 - 1000 $m^3kg^{-1}$.

8. Mineral clay composition according to any of the claims 1-7, wherein the mineral clay composition comprises ferromagnetic and ferrimagnetic components in an amount of at most 2 wt.%, relative to the weight of the layered phyllosilicate.

9. Process for the preparation of a mineral clay composition, starting from a non-calcined mineral clay comprising material comprising (i) a dispersion step, (ii) a sonifcation step, (iii) a separation step and (iv) a percolation step, wherein neither the starting material nor the mineral clay composition is ion-exchanged with alkali ions prior to or during the process.

10. Process according to claim 9, comprising the steps of subjecting a natural ore comprising a mineral clay to a separation process by gravitation and /or magnetism, separating the fractions and subjection the fraction enriched in mineral clay to a "drainage process" with demineralized water.

11. Process according to claim 9, comprising the steps of (I) dispersing a natural clay comprising a layered phyllosilicate comprising paramagnetic ions in water thereby making a suspension of the clay in demineralized water, (II) subjecting the suspension to sonic forces thereby obtaining a sonic-treated suspension, (III) subjecting the sonic-treated suspension to gravitational forces thereby forming a layered system comprising a supernatant liquid and optionally a sediment, the supernatant liquid consisting of different layers, at least one layer of the different layers comprising clay residues comprising layered phyllosilicate, isolating the at least one layer, and (IV) percolating the at least one layer with demineralized water until the percolated layer, optionally diluted with demineralized water, has a conductivity, measured at a concentration of 1 g of the clay residues relative to the total weight of the demineralized water and the mineral clay composition, of at most 20 $\mu$S/m.

12. Use of a mineral clay composition according to any of claims 1-8 in a product designed for improving the well-being of living beings.

13. Use according to claim 12, wherein the product is designed for improving the well-being of living beings near apparatus emitting non-ionizing electromagnetic radiation.

14. Material composition comprising a carrier material and a mineral clay composition according to any of claims 1-8 dispersed in the carrier material, wherein the carrier material is a diamagnetic material, a mineral component with a low magnetic susceptibility, or a polymer with a low polarity.

15. Material composition according to claim 13, wherein the diamagnetic carrier is hectorite, laponite, demineralized water, or an organic polymer, or a combination thereof.

16. Use of a mineral clay composition according to any of claims 1-8 in leisure articles, textile products, shoes and clothing, personal care products, polymer compositions and articles made thereof, food and feed products, ready-made packaging for personal use, medicines, drugs, low-, medium- and high-voltage cables, WIFI/WLAN applications, mobile phones, telecommunication antennae, computer screens, satellites, video display units, tv-monitors, microwave ovens, transformers, and space stations.

**17.** Articles, such as textile products, shoes and clothing, personal care products, polymer compositions and articles made thereof, food and feed products, and ready-made packaging for personal use, medicines, drugs, low-, medium- and high-voltage cables, WIFI/WLAN applications, mobile phones, telecommunication antennae, computer screens, satellites, video display units, tv-monitors, microwave ovens, transformers, and space stations comprising a mineral clay composition according to any of claims 1-8.

**18.** Packaging comprising a non-metallic container and a mineral clay composition according to any of claims 1-8.

European Patent
Office

**EUROPEAN SEARCH REPORT**

Application Number

EP 06 07 5547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PATENT ABSTRACTS OF JAPAN vol. 011, no. 116 (P-566), 11 April 1987 (1987-04-11) & JP 61 262642 A (TOYOTA CENTRAL RES & DEV LAB INC), 20 November 1986 (1986-11-20) * abstract * | 1-18 | INV. C01B33/38 C08K3/34 G12B17/02 H05K9/00 G21F1/06 D01F1/10 |
| A | DATABASE WPI Section EI, Week 200131 Derwent Publications Ltd., London, GB; Class S01, AN 2001-298442 XP002383669 & RU 2 162 281 C1 (THEORETICAL & EXPER PHYSICS INST) 20 January 2001 (2001-01-20) * abstract * | 1-8, 12-18 | |
| A | EP 0 889 004 A (CLARIANT GMBH) 7 January 1999 (1999-01-07) * page 5, lines 2-7,24-46; example 1 * | 1-11 | |
| X | WO 03/027017 A (ROHM AND HAAS COMPANY) 3 April 2003 (2003-04-03) | 9,10 | TECHNICAL FIELDS SEARCHED (IPC) |
| A | * paragraphs [0022], [0023], [0026], [0036], [0049]; example 1 * | 11 | C01B C08K G12B |
| A | US 4 909 901 A (MCALLISTER ET AL) 20 March 1990 (1990-03-20) * claims 1-4 * | 1-8, 12-18 | H05K G21F D01F |

The present search report has been drawn up for all claims

| Place of search | Date of completion of the search | Examiner |
|---|---|---|
| Munich | 2 June 2006 | Werner, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 06 07 5547

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2006

| Patent document cited in search report | | Publication date | Patent family member(s) | | Publication date |
|---|---|---|---|---|---|
| JP 61262642 | A | 20-11-1986 | NONE | | |
| RU 2162281 | C1 | 20-01-2001 | NONE | | |
| EP 0889004 | A | 07-01-1999 | DE 19727893 | A1 | 07-01-1999 |
| WO 03027017 | A | 03-04-2003 | BR 0211699 | A | 09-11-2004 |
| | | | CN 1527798 | A | 08-09-2004 |
| | | | EP 1429998 | A1 | 23-06-2004 |
| | | | JP 2005503985 | T | 10-02-2005 |
| US 4909901 | A | 20-03-1990 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0551668 A1
- WO 0034411 A
- WO 02090626 A
- US 20020028870 A1

### Non-patent literature cited in the description

- **M. PLASCHKE ; T. SCHÄFER ; T. BUNDSCHUH ; T. N. MANH ; R. KNOPP ; H. GECKEIS ; J. I. KIM.** Size characterization of montmorillonite colloids by different methods. *Anal. Chem.,* 2001, vol. 73, 4338-4347
- **S.W. BAILEY.** Summery of recommendations of AIPEA nomenclature committee on clay minerals. *American Mineralogist,* 1980, vol. 65, 1-7
- **W. E. WORRALL.** Clays and ceramic raw materials. Elsevier Appl. Sc. Publ, 1986, 30-46
- **C.P. HUNT ; B.M. MOSKOWITZ ; S.K. BANERJEE.** Magnetic properties of Rocks and Minerals. American Geophysical Union, 1995, 189-204